# EUROPÄISCHE PATENTANMELDUNG

(11) **EP 1 808 646 A2**
(43) Veröffentlichungstag der Anmeldung: **18.07.2007**
(21) Anmeldenummer: 06020233.0
(22) Anmeldetag: 27.09.2006
(51) Int. Cl.: F24F 5/00

(54) **Vorrichtung zum klimatisieren von Räumen und Gebäuden**

(30) Priorität: 29.09.2005 DE 102005048210
(71) Anmelder: Kälberer, Stefan, 73344 Gruibingen (DE)
(72) Erfinder: Kälberer, Stefan, 73344 Gruibingen (DE)
(74) Vertreter: Jackisch-Kohl, Anna-Katharina

(57) **Zusammenfassung**

Zum Erwärmen und Kühlen von Räumen und Gebäuden werden Vorrichtungen mit mindestens einem Klimaelement und mindestens einem Strömungskanal für ein Wärmeträgermedium verwendet. Um eine möglichst gleichmäßige Wärmeabstrahlung zu erreichen, weist der Strömungskanal für das Wärmeträgermedium eine Außenseite auf, die an der Rückseite einer Raumfläche wärmeleitend anliegt. Die Vorrichtung wird vorzugsweise in Wohn- oder Büroräumen eingesetzt.

## Beschreibung

Die Erfindung betrifft eine Vorrichtung zum Klimatisieren von Räumen und Gebäuden nach dem Oberbegriff des Anspruches 1.

Es sind Vorrichtungen zum Erwärmen und Kühlen von Räumen und Gebäuden bekannt, bei denen das Wärmeträgermedium durch im Querschnitt kreisförmige Rohre strömt, die an der Rückseite einer Wärmeabstrahlplatte befestigt sind. Die Oberflächentemperatur dieser Platte ist ungleichmäßig, da die Rohre unterschiedlichen Abstand zur Platte haben und sich infolge des kreisförmigen Querschnittes der Rohre unterschiedliche Abstände zwischen der Außenseite des Rohrmantels und der Platte ergeben.

Die Erfindung liegt die Aufgabe zugrunde, eine Vorrichtung der gattungsbildenden Art so auszubilden, daß eine möglichst gleichmäßige Wärmeabstrahlung gewährleistet ist.

Diese Aufgabe wird bei einer Vorrichtung der gattungsbildenden Art erfindungsgemäß mit den kennzeichnenden Merkmalen des Anspruches 1 gelöst.

Bei der erfindungsgemäßen Vorrichtung liegen die ebenen Außenseiten des Strömungskanales an der Rückseite der Raumfläche wärmeleitend an. Sie bildet eine Wärme/Kälteabstrahlfläche. Vorteilhaft ist die Außenseite des Strömungskanals eben. Dann ergibt sich ein gleichmäßiger Wärme/Kälteübergang zur Raumfläche. Das Klimaelement kann ein quaderförmiger Hohlkörper sein, dessen Innenraum von Wärmeträgermedium durchströmt wird. Die entsprechende Seite des Hohlkörpers wird dann gleichmäßig erwärmt bzw. gekühlt. Diese Seite hat dementsprechend über ihre Fläche zumindest annähernd gleiche Temperatur. Dementsprechend weist auch die Raumfläche über ihre dem Raum zugewandte Außenseite ebenfalls zumindest annähernd gleiche Temperatur auf. Auf diese Weise kann mit der erfindungsgemäßen Vorrichtung eine optimale Heiz- und Kühlleistung im Raum gewährleistet werden.

Weitere Merkmale der Erfindung ergeben sich aus den weiteren Ansprüchen, der Beschreibung und den Zeichnungen.

Die Erfindung wird nachstehend anhand mehrerer in den Zeichnungen dargestellter Ausführungsbeispiele näher beschrieben. Es zeigt:
- Fig. 1: in Vorderansicht ein Klimaelement einer erfindungsgemäßen Vorrichtung,
- Fig. 2: in vergrößerter Darstellung einen Schnitt längs der Linie II-II in Fig. 1,
- Fig. 3 und Fig. 4: eine weitere Ausführungsform eines Klimaelementes einer erfindungsgemäßen Vorrichtung in Darstellungen entsprechend den Fig. 1 und 2,
- Fig. 5: eine Vorderansicht mehrere erfindungsgemäße Vorrichtungen an einem Ständer,
- Fig. 6: eine Draufsicht auf die Anordnung nach Fig. 5,
- Fig. 7: einen Teil der Anordnung nach Fig. 5 in Draufsicht gemäß Pfeil VII in Fig. 5,
- Fig. 8: eine Ansicht in Richtung des Pfeiles VIII in Fig. 7,
- Fig. 9: in vergrößerter Darstellung eine Ansicht in Richtung des Pfeiles IX in Fig. 7,
- Fig. 10: in Vorderansicht eine weitere Ausführungsform einer erfindungsgemäßen Vorrichtung,
- Fig. 11: in Draufsicht mehrere Vorrichtungen entsprechend Fig. 10, die an einer Wand angeordnet sind,
- Fig. 12 und Fig. 13: jeweils eine weitere Ausführungsform einer erfindungsgemäßen Vorrichtung, die an einer Decke abgehängt ist,
- Fig. 14: die Vorrichtung nach Fig. 13 ohne Raumfläche,
- Fig. 15: in Stirnansicht eine weitere erfindungsgemäße Vorrichtung,
- Fig. 16: im Querschnitt eine weitere Ausführungsform einer erfindungsgemäßen Vorrichtung, die an einer Raumfläche vorgesehen ist.

Die in den Zeichnungen dargestellten Vorrichtungen dienen zum Erwärmen und/oder zum Kühlen von Räumen, vorzugsweise von Wohn- oder Büroräumen. Solche Vorrichtungen werden vor Wänden, unterhalb von Decken oder am Boden, beispielsweise auf dem Estrich eines Raumes, befestigt.

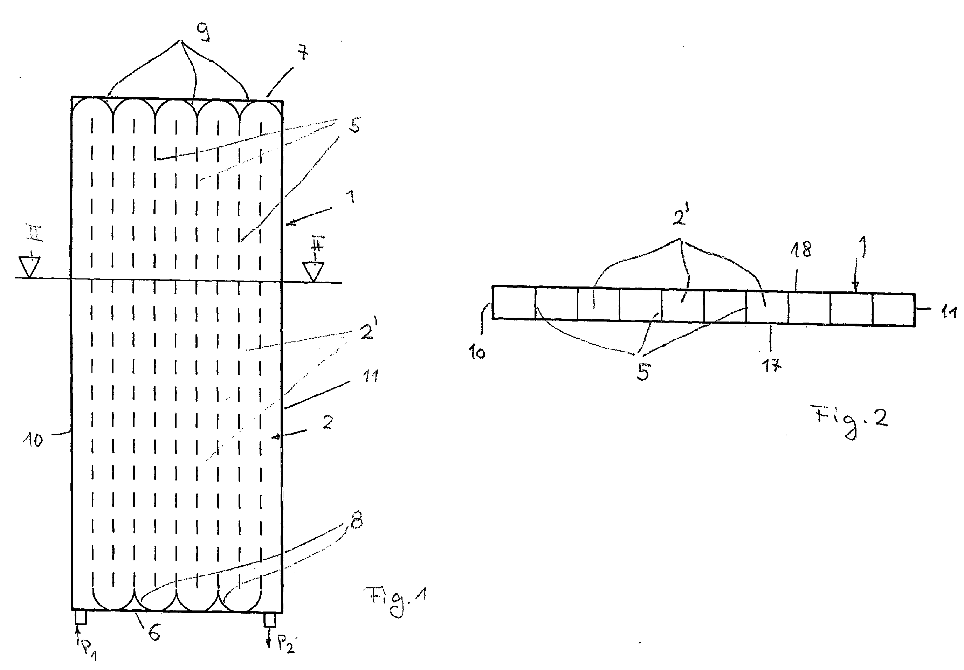

Die Fig. 1 und 2 zeigen ein Klimaelement 1, das mit einem Vorlauf und einem Rücklauf eines (nicht dargestellten) Rohrnetzes einer Heiz- oder Kühlanlage des Gebäudes verbunden ist. Das Klimaelement ist als kastenartiger Hohlkörper mit rechteckigem Querschnitt ausgebildet. Sein Hohlraum 2 dient zur Aufnahme eines im Rohrnetz geführten Wärmeträgermediums, das vorzugsweise Wasser oder Wasserdampf ist. An einer schmalen Stirnwand 6 des Klimaelementes 1 sind ein Einlaß- und Auslaßstutzen 3 und 4 vorgesehen, über die das Wärmeträgermedium durch das Klimaelement 1 ein- bzw. ausströmt (Pfeile P1 und P2). Es besteht beispielsweise aus Kunststoff, verzinktem Stahlblech, Kupfer, Aluminium oder dergleichen, aus wärmeleitendem und/oder rostfreiem Material.

Wie die Fig. 1 und 2 weiter zeigen, ist der das Wärmeträgermedium führende Hohlraum 2 in eine Vielzahl von Kanälen 2' unterteilt, die durch im Hohlraum angeordnete Leitbleche 5 gebildet sind. Die Leitbleche 5 erstrecken sich zwischen den Innenseiten einander gegenüberliegender, zueinander paralleler Seitenwände 17, 18 des Klimaelementes 1. Die Leitbleche 5 haben vorzugsweise gleichen Abstand voneinander und von Längsseiten 10, 11 und verlaufen senkrecht zwischen den Seitenwänden 17, 18 des Klimaelementes 1. Jeweils übernächste Leitbleche 5 sind über teilkreisförmig gekrümmte Umlenkbleche 8, 9 miteinander verbunden. Die Umlenkbleche 8 verbinden an der einen Stirnwand 6 die Enden übernächster und die Umlenkbleche 9 an der gegenüberliegenden Stirnwand 7 die Enden der dazwischen liegenden Leitbleche 5 miteinander. Die Umlenkbleche 8, 9 an den beiden zueinander parallelen Stirnwänden 6, 7 liegen somit um die Breite des Kanals 2' versetzt zueinander. Die Umlenkbleche 8, 9 sind so gekrümmt, daß das Medium innerhalb des Hohlraumes 2 bzw. den Kanälen 2' mäanderförmig vom Einlaßstutzen 3 zum Auslaßstutzen 4 strömt. Die Umlenkbleche 8, 9 sind an den Innenseiten der Stirnwände 6, 7 befestigt.

Die Kanäle 2' sind zwischen den zueinander parallelen, ebenen Seitenflächen 17, 18 des Klimaelementes 1 über dessen gesamte Breite gleichmäßig verteilt angeordnet, um gleichmäßige Strömungsverhältnisse zu gewährleisten. Mit den ebenen Seitenflächen 17, 18 läßt sich das Klimaelement 1 einfach an einer Raumfläche, wie einer Wand, des zu klimatisierenden Raumes befestigen oder mit einer Wandverkleidungsplatte oder dergleichen versehen. Durch die ebene Ausbildung der Seitenwände 17, 18 wird eine gleichmäßige Wärme/Kälteabgabe über die Fläche der Seitenflächen 17, 18 gewährleistet.

Wie sich aus Fig. 2 ergibt, haben die Kanäle 2' rechteckigen Querschnitt. Die in den Seitenwänden 17, 18 liegenden Begrenzungswände der Kanäle 2' werden vom Medium vollständig beaufschlagt. Dadurch ergibt sich eine nahezu gleichmäßige Oberflächentemperatur über die gesamte Fläche der Seitenwände 17, 18.

Schließlich kann in den Hohlraum 2 des Klimaelementes 1 das Wärmeleitmedium auf einfache Weise eingebracht werden, ohne daß zusätzliche gesonderte Rohre erforderlich sind.

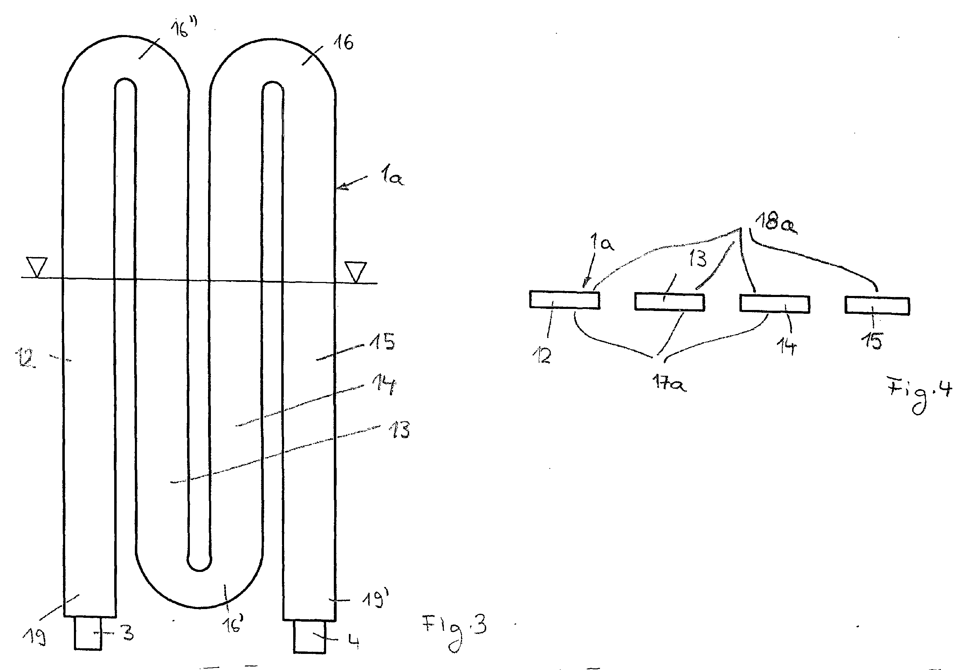

Die Fig. 3 und 4 zeigen eine weitere Ausführungsform, bei der das Klimaelement 1a aus einem mäanderförmig gebogenen Rohr besteht, das, wie insbesondere Fig. 4 zeigt, rechteckigen Querschnitt hat. Es besteht aus zueinander parallelen Rohrabschnitten 12 bis 15, die über gekrümmte Endabschnitte 16, 16' und 16" ineinander übergehen. Die freien Rohrenden 19, 19' der äußeren Rohrabschnitte 12, 15 weisen den Einlaß- bzw. den Auslaßstutzen 3, 4 auf. Auch bei diesem Klimaelement 1a kann durch die rechteckige Querschnittsausbildung der Rohrabschnitte 12 bis 15 und der Endabschnitte 16, 16', 16" eine gleichmäßige Wärme/Kälteabgabe erreicht werden.

Die dem zu kühlenden oder zu wärmenden Raum zugewandten Seitenflächen der Rohrabschnitte 12 bis 15 und der Endabschnitte 16, 16', 16" sind eben, so daß wie bei der vorhergehenden Ausführungsform über diese Fläche eine gleiche Oberflächentemperatur erreicht wird.

Der Abstand zwischen den Rohrabschnitten 12 bis 15 kann je nach den gewünschten Anforderungen gewählt werden. Je kleiner die Abstände sind, desto mehr nähert sich diese Ausbildung hinsichtlich der Wärme/Kälteabgabe dem Ausführungsbeispiel nach den Fig. 1 und 2.

Die Rohrabschnitte 12 bis 15 und die gekrümmten Endabschnitte 16, 16', 16" sind vorteilhaft einstückig miteinander ausgebildet. Es ist möglich, diese Teile lösbar miteinander zu verbinden. Dies hat den Vorteil, daß bei einem Reparatur- oder Wartungsfall nicht das gesamte Klimaelement 1 a ausgetauscht werden muß.

Ferner läßt sich an den Seitenflächen 17a, 18a, die durch die ebenen Außenflächen der Rohrabschnitte 12 bis 15 und der Endabschnitte 16, 16', 16" gebildet sind, problemlos die Raumfläche, z.B. eine Wandverkleidung, befestigen bzw. läßt sich das Klimaelement 1 a einfach an einer Wand befestigen, wobei durch die flächige Anlage eine gleichmäßige Abstrahlung der abzugebenden Wärme bzw. Kälte gewährleistet ist.

Durch Einsatz des Klimaelementes 1, 1a ist eine hervorragende Heiz- oder Kühlleistung gewährleistet, wobei ein hoher Anteil der Wärmeenergie durch Strahlung gegeben wird. Dadurch wird ein optimales Raumklima erzeugt.

Das Klimaelement kann an jeder geeigneten Stelle des Raumes angeordnet werden. Vorteilhaft wird das Klimalement an den Wänden des Raumes montiert. Die Abmessungen des Klimaelementes 1 richten sich nach den geforderten Heiz/Kühlleistungen. Es ist möglich, mehrere Klimaelemente im Raum zu montieren. Es kann aber auch nur ein einziges Klimaelement mit entsprechend großen Abmessungen vorgesehen sein.

Das Klimaelement kann nicht nur an den Seitenwänden des Raumes, sondern zusätzlich oder auch allein im Boden- und/oder Deckenbereich des Raumes vorgesehen werden. Es ist auch möglich, das Klimalement beispielsweise freistehend im Raum anzuordnen, wie noch erläutert wird.

Da die Wärme bzw. Kälte hauptsächlich durch Strahlung von der das Klimaelement aufweisenden Vorrichtung in den Raum abgegeben wird, entsteht im Raum selbst nur eine minimale Luftbewegung, die von den Benutzern des Raumes nahezu nicht bemerkt wird.

Da der Einlaß- und Auslaßstutzen 3, 4 an der gleichen Seite des Klimaelementes 1, 1a vorgesehen ist, ist eine problemlose Montage gewährleistet. Je nach den vorgegebenen Einbauverhältnissen können die Stutzen 3, 4 auch an unterschiedlichen Seiten des Klimaelementes 1, 1a vorgesehen sein.

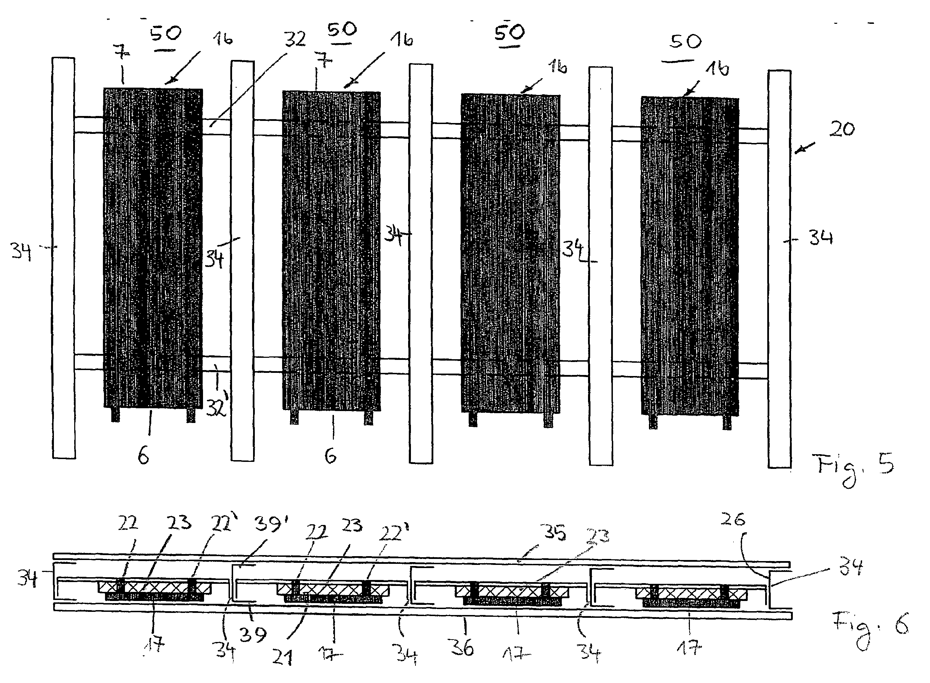

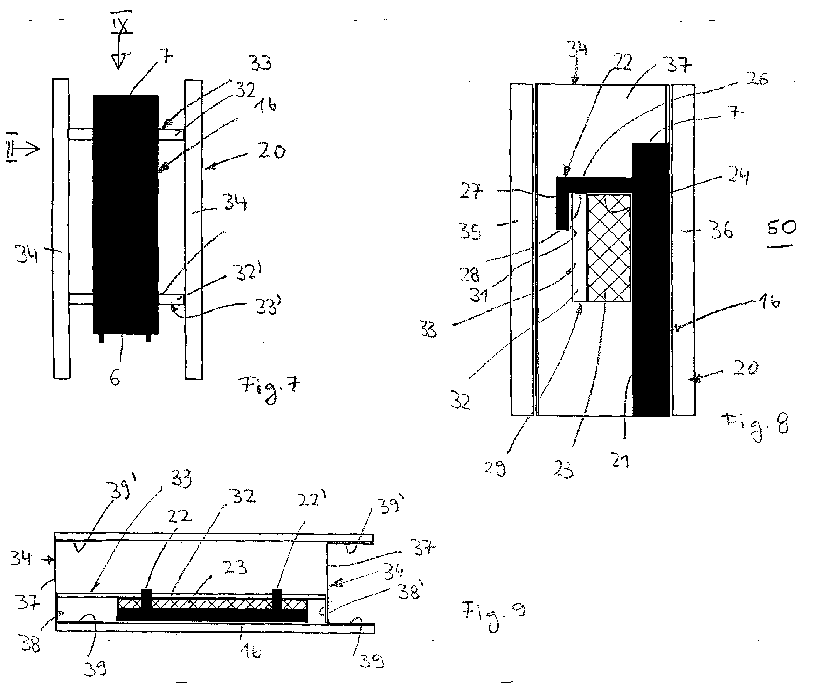

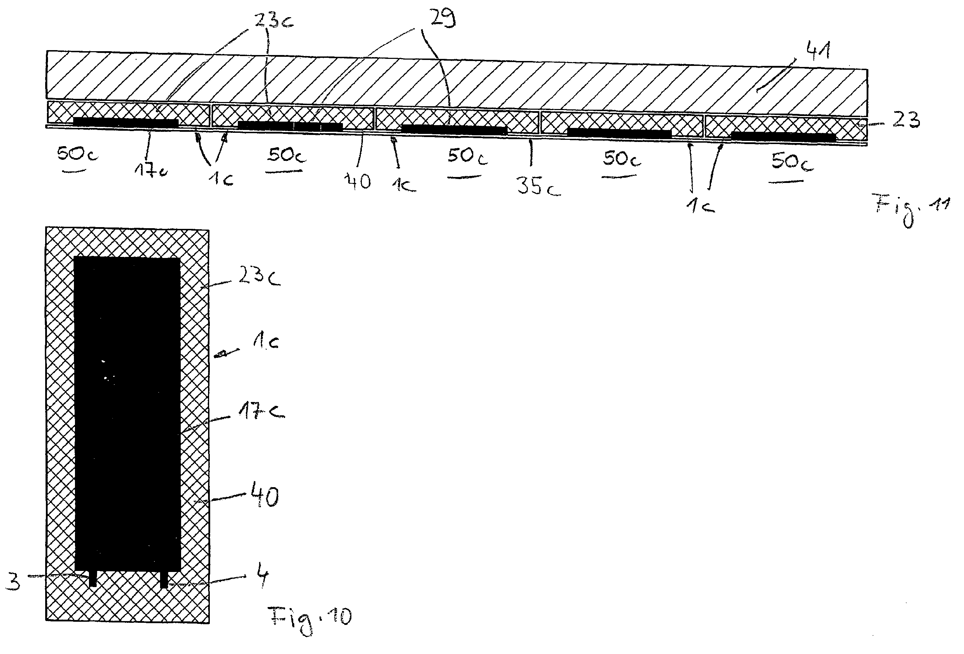

Fig. 5 zeigt Vorrichtungen 50, die in einem frei stehenden Ständer 20 lösbar befestigt sind. Die Vorrichtungen 50 haben jeweils ein Klimaelement 1 b, das im wesentlichen gleich ausgebildet ist wie das Klimaelement 1 gemäß den Fig. 1 und 2. Die Klimaelemente 1b weisen an der Rückseite 21 (Fig. 6, 8, 9) vorstehende, L-förmige Haltebügel 22, 22' sowie ein Isolierteil 23 auf. Es ist vorzugsweise als im Querschnitt rechteckige Platte ausgebildet, die gleiche Breite wie das Klimaelement 1 b hat (Fig. 9). Gemäß Fig. 6 kann das Isolierteil 23 aber auch breiter als das Klimaelement 1 b sein. Die Höhe des Isolierteiles 23 entspricht der Höhe von Querträgern 32, 32' (Fig. 8), auf die das Klimaelement 1 b aufgehängt wird. Das Isolierteil 23 ist an der Außenseite des Querträgers 32, 32' befestigt, an der das Isolierteil 23 flächig anliegt. Es kann an der Rückseite 21 des Klimaelementes 1 b anliegen. Vorteilhaft hat das Isolierteil 23 jedoch geringen Abstand von der Rückseite 21. Das Klimaelement 1b weist im Ausführungsbeispiel mit Abstand oberhalb und unterhalb der unteren bzw. oberen Stirnwand 6, 7 (Fig. 5, 7, 8) jeweils zwei mit Abstand von den Schmalseiten 10, 11 und größerem Abstand voneinander liegende Haltebügel 22, 22' auf (Fig. 6, 8), die vorzugsweise gleich ausgebildet sind. Sie schließen mit ihrem längeren Halteschenkel 26 senkrecht an die Rückseite 21 des Klimaelementes 1 b an. Der kürzere Halteschenkel 27 ragt senkrecht nach unten. Der obere Rand 24 des Isolierteils 23 hat geringen Abstand von der Unterseite 28 des Halteschenkels 26.

Der Ständer 20 hat aufrechte Stützen 34, die mit Abstand voneinander liegen und durch die Querträger 32, 32' miteinander verbunden sind. Die Querträger 32, 32' sind Teile von Haltevorrichtungen 33, 33' für die Klimaelemente 1 b.

Die Haltebügel 22, 22' und das Isolierteil 23 können auch eine andere Ausbildung haben. Es können auch mehrere neben- und übereinander liegende solcher Teile vorgesehen sein.

Wie die Fig. 5 und 6 zeigen, sind am Ständer 20 mehrere, im Ausführungsbeispiel vier Klimaelemente 1 b angeordnet, die mit ihren Haltebügeln 22, 22' in die Querträger 32, 32' der Haltevorrichtungen 33, 33' eingehängt sind. Sie sind mit Abstand vom oberen und unteren Ende der Stützen 34 vorgesehen, die vorteilhaft U-Schienen sind (Fig. 9). Die Stützen 34 sind jeweils gleich ausgebildet, so daß die Schenkel 39, 39' vom Quersteg 37 der Stützen 34 in gleicher Richtung abstehen.

Die Querträger 32, 32' werden vorteilhaft durch zwei teleskopartig ineinandergesetzte Teile gebildet, so daß die Länge der Querträger zur Anpassung an den Abstand zwischen den Stützen 34 stufenlos verstellt werden kann. Die Querträgerteile sind an ihren voneinander abgewandten Enden mit quer verlaufenden Halteflanschen 38, 38' versehen, mit denen die Querträger 32, 32' an den Querstegen 37 der Stützen 34 befestigt werden.

Die Querträger 32, 32' und/oder die Stützen 34 können selbstverständlich auch andere Ausbildungen haben.

An den Schenkeln 39, 39' sind Verkleidungsplatten 35, 36 befestigt, die jeweils beispielsweise Gipskartonplatten sind und eine vordere und eine hintere Wandbeplankung bilden.

Die Verkleidungsplatten 35, 36 decken die Klimaelemente 1b, die Stützen 34 und die Querträger 32, 32' ab. Vorteilhaft schließen die Verkleidungsplatten 35, 36 jeder Wandbeplankung unmittelbar aneinander an, so daß die Ständerwand geschlossene Wände hat.

Die Wandbeplankung 35 liegt mit Abstand hinter den Halteschenkeln 27 der Haltebügel 22, 22' (Fig. 8). Wie sich aus den Fig. 6 und 9 ergibt, ist die Breite des Klimaelementes 1 b kleiner als der Abstand zwischen benachbarten Stützen 34. Vorteilhaft ist die Breite des Klimaelementes 1 b und der Vorrichtung 50 größer als der halbe Abstand zwischen den Stützen 34. Je nach Einsatzbedingungen kann die Vorrichtung 50 auch größere Breite haben.

Die Wandbeplankung 36 liegt flächig an den Klimaelementen 1b an, die ihre Wärme somit optimal an die Wandbeplankung 36 abgeben. Sie wiederum strahlt die Wärme in den Raum ab.

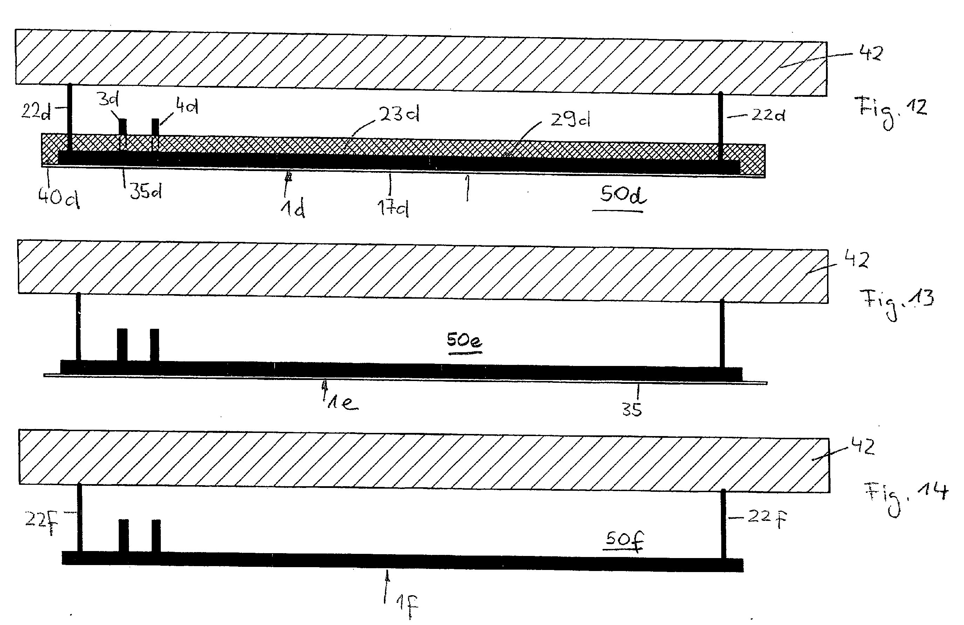

Bei der Ausführungsform gemäß den Fig. 10 und 11 sind die Vorrichtungen 50c vor einer Massivwand 41 montiert. Die Vorrichtungen 50c haben jeweils ein Klimaelement 1 c, das im Ausführungsbeispiel gleich ausgebildet ist wie das Klimalement 1 gemäß den Fig. 1 und 2 und in ein Isolierteil 23c eingesetzt ist, das das Klimalement an allen Seitenrändern überragt (Fig. 10). Das Isolierteil 23c hat an seiner Vorderseite 40 eine zentrale Vertiefung 29, in die das Klimalement 1 c eingesetzt ist, das über die Vertiefung 29 vorsteht.

An der Vorderseite 17c des Klimaelementes 1c liegt die Wandbeplankung in Form der Verkleidungsplatten 35c flächig an, die beispielsweise aus Gipskartonplatten bestehen können und entsprechend der vorigen Ausführungsform eine Raumfläche bilden. Mit der Rückseite der Isolierteile 23c kann das Klimalement 1 c an der Massivwand 41 beispielsweise angeklebt oder angeschraubt werden. Die Verkleidungsplatten 35c sind an der Vorderseite des plattenförmigen Isolierteiles 23c befestigt. Es stellt sicher, daß die Massivwand 41 nicht stark erwärmt bzw. gekühlt wird. Die von den Klimaelementen 1c abgegebene Wärme/Kälte wird an die Wandbeplankung 35 übertragen, die in den Raum abstrahlt. Da die Strömungskanäle 2' (Fig. 1 und 2) des Klimaelementes rechteckigen Querschnitt haben, wird über die flächige Anlage des Klimaelementes 1c an der Verkleidungsplatte 35 ein optimaler Wärme/Kälteübergang erreicht.

Je nach Größe der Massivwand 41 können mehrere Vorrichtungen 50c neben- und/oder übereinander vorgesehen sein.

Fig. 12 zeigt eine Vorrichtung 50d mit einem Klimaelement 1d, das in die Vertiefung 29d des Isolierteiles 23d so eingesetzt ist, daß die dem Raum zugewandte Außenseite 17d des Klimaelementes 1 d in einer Ebene mit der entsprechenden Außenseite 40d des Isolierteiles 23d liegt. Wie bei der vorigen Ausführungsform wird das Klimaelement 1d an seinen Rändern vom Isolierteil 23d überragt. Die Verkleidungsplatte 35d liegt in diesem Fall an beiden ebenen Außenseiten 17d, 40d des Klimaelementes 1 d und des Isolierteiles 23d flächig an und ist am Isolierteil 23d befestigt.

Die Anschlüsse 3d, 4d stehen im Unterschied zu den vorigen Ausführungsformen quer von der Rückseite des Klimaelementes 1d ab. An der Rückseite des Klimaelementes 1 d sind Halter 22d befestigt, mit denen die Vorrichtung 50d an einer Raumdecke 42 hängend befestigt wird. Die Halter 22d sind vorteilhaft in den Eckbereichen der Vorrichtung 50d vorgesehen und können Stangen, Seile, Drähte und dergleichen sein. Die Anschlüsse 3d, 4d und die Halter 22d durchsetzen das Isolierteil 23d nach oben. Die Vorrichtung 50d ist so an der Raumdecke 42 aufgehängt, daß das Isolierteil 23d Abstand von der Raumdecke 42 hat. Die aus dem Klimaelement 1d, dem Isolierteil 23d und der Beplankung 35d gebildete Vorrichtung 50d bildet eine abgehängte Decke. An der Raumdecke 42 können je nach Bedarf mehrere Vorrichtungen 50d aufgehängt werden, die mit Abstand oder unmittelbar aneinander anschließend neben- und/oder hintereinander vorgesehen sein können. Die das Wärme/Kältemedium leitenden Rohre oder Leitungen können im Zwischenraum zwischen der Raumdecke 42 und der Vorrichtung 50d untergebracht werden, so daß sie vom Raum aus nicht zu sehen sind.

Die Halter 22d können auch längenverstellbar ausgebildet sein, beispielsweise durch eine teleskopartige Ausbildung. Dann kann der Abstand zwischen der Raumdecke 42 und der Vorrichtung 50d stufenlos eingestellt werden, so daß eine einfache Montage gewährleistet ist.

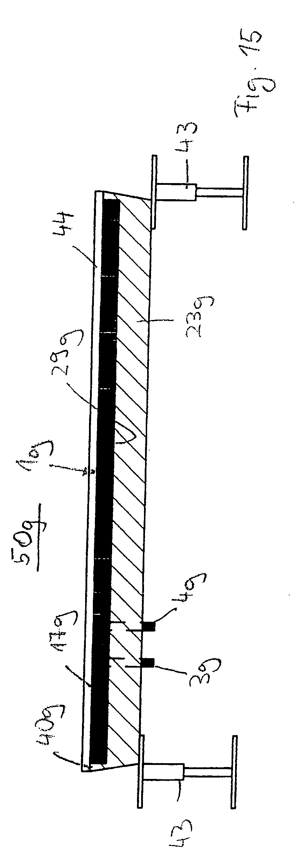

Bei der Ausführungsform nach Fig. 13 ist kein Isolierteil vorgesehen. Im übrigen entspricht diese Vorrichtung 50e mit dem Klimaelement 1e und der Verkleidungsplatte 35e dem vorigen Ausführungsbeispiel.

Die Vorrichtung 50f nach Fig. 14 hat nur das Klimaelement 1f, das mit den Haltern 22f an der Raumdecke 42 aufgehängt ist.

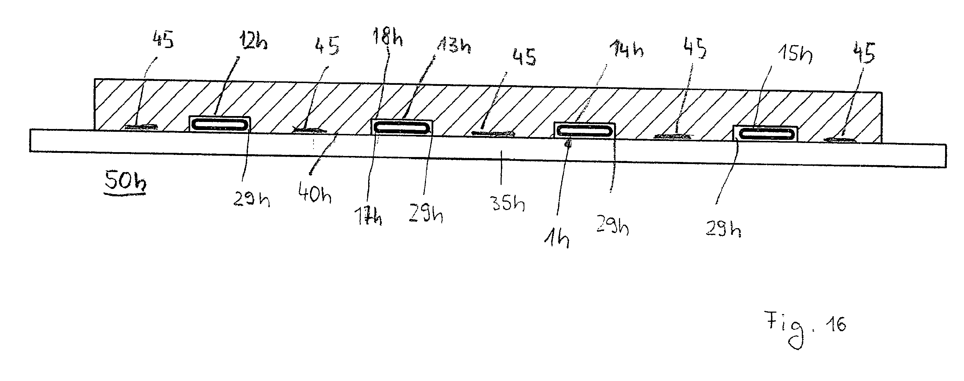

Fig. 15 zeigt die Möglichkeit, die Vorrichtung 50g im Bodenbereich des Raumes einzusetzen. Die Vorrichtung 50g hat das Klimaelement 1g, das in die Vertiefung 29g in der Oberseite des Isolierteiles 23g so eingesetzt ist, daß die Oberseite 17g des Klimaelementes 1g mit der Oberseite 40g des lsolierteiles 23g in einer Ebene liegt. Auf der Oberseite 17g, 40g läßt sich ein Bodenbelag 44 als Raumfläche problemlos aufbringen. Er kann ein Estrich und/oder ein darauf angeordneter Kunststoff, Stahl, Teppich oder auch Parkettbelag sein. Das Isolierteil 23g besteht zur Aufnahme der bei Belastung auftretenden hohen Kräfte aus einem hochfesten Material.

Anstelle des Isolierteiles 23g kann auch eine Bodenplatte verwendet werden. Der Einlaß- und der Auslaßstutzen 3g, 4g ragen durch das Isolierteil 23g nach unten.

Im Ausführungsbeispiel liegt die Vorrichtung 50g auf Bodenstützen 43 auf, die höhenverstellbar sind und auf denen die Vorrichtung mit dem Isolierteil 23g aufliegt. Mit den Bodenstützen 43 können beispielsweise Unebenheiten des Untergrundes einfach ausgeglichen werden. Die Leitungen für das Wärme/Kältemedium können unterhalb der Vorrichtung 50g einfach verlegt werden.

Fig. 16 zeigt eine Vorrichtung 50h, bei der das Klimaelement 1 h, ähnlich wie das Klimaelement 1 a gemäß den Fig. 3 und 4, aus einem mäanderförmig gebogenen, jeweils vorzugsweise aus Kupfer hergestellten Rohr besteht, das ebenfalls im wesentlichen rechteckigen Querschnitt hat. Die zueinander parallelen Rohrabschnitte 12h bis 15h, gehen über (nicht dargestellte) Rohrenden ineinander über und weisen an ihren freien Enden den ebenfalls nicht dargestellten Ein- und Auslaßstutzen auf. Die rechteckige Querschnittsausbildung des Klimaelementes 1 h gewährleistet eine gleichmäßige Wärme/Kälteabgabe des Klimagerätes. Das Rohr 1 h beziehungsweise seine Rohrabschnitte 12h bis 15h liegen in den Vertiefungen 29h des Isolierteiles 23h, das das Klimaelement 1 h an den beiden Rändern seitlich überragt. Das plattenartige Isolierteil 23h ist im Ausführungsbeispiel relativ dick; es ist um ein Mehrfaches dicker als die Tiefe der Vertiefungen 29h, die in der Vorderseite 17h des Isolierteiles 23h vorgesehen sind.

Die Außenflächen 17h der Rohrabschnitte 12h bis 15h liegen in der Ebene der Vorderseite 40h des Isolierteiles 23h. Eine beispielsweise als Verkleidungsplatte 35h ausgebildete Wandbeplankung liegt an der Vorderseite 40h des Isolierteiles 23h und an den Außenflächen 17h der Rohrabschnitte 12h bis 15h an. Die Verkleidungsplatte 35h ist mit dem Isolierteil 23h im Bereich zwischen den Vertiefungen 29h verklebt. Die Klebeschicht 45 kann sich vollständig zwischen den Vertiefungen 29h erstrecken. Sie kann aber auch nur über einen Teil des Bereiches zwischen den Vertiefungen 29h vorgesehen sein. Die Verkleidungsplatte 35h ragt über beide Enden des Isolierteiles 23h und ist nur etwa halb so dick wie dieses.

Die Vorrichtung 50h kann als Deckenelement, als Wandelement, als freistehendes Element oder als Bodenelement eingesetzt werden, wie es zuvor für die anderen Ausführungsformen beschrieben worden ist. Die Vorrichtung 50h kann selbstverständlich in ihren Abmessungen beliebig verändert werden. Sie hat den Vorteil, daß sie äußerst kostengünstig und konstruktiv einfach hergestellt werden kann.

Bei den beschriebenen Ausführungsbeispielen ist das wärme/kälteleitende Klimaelement formfest ausgebildet. Es ist ohne weiteres möglich, daß dieses Element zumindest eine flexible Wärme/Kälteleitfläche aufweisen kann. Sogar das gesamte Element kann nach Art eines Schlauches, einer Luftmatratze und dergleichen flexibel ausgebildet sein, wobei das Element selbstverständlich die beschriebenen Strömungskanäle enthält. Ein solches Klimaelement kann leicht transportiert und ohne enge Toleranzen hergestellt und montiert werden. Insbesondere kann die Vorrichtung bei Einsatz solcher flexibler Klimaelemente auch gekrümmte Formgebung haben.

## Patentansprüche

1. Vorrichtung zum Klimatisieren von Räumen und Gebäuden, mit mindestens einem Klimaelement mit mindestens einem Strömungskanal für ein Wärmeträgermedium,
**dadurch gekennzeichnet, daß** der Strömungskanal (2') eine Außenseite (17, 18; 17a, 18a; 17h) aufweist, die an der Rückseite einer Raumfläche (35, 36, 35c; 35d; 35h; 44) wärmeleitend anliegt.

2. Vorrichtung nach Anspruch 1,
**dadurch gekennzeichnet, daß** das Klimaelement (1, 1b bis 1 h) ein Hohlkörper ist, dessen Hohlraum (2) vorzugsweise durch Trennelemente (5), wie Leitbleche, in wenigstens zwei Strömungskanalabschnitte unterteilt ist.

3. Vorrichtung nach Anspruch 2,
**dadurch gekennzeichnet, daß** die Trennelemente (5) parallel zueinander verlaufen und sich vorteilhaft über die ganze Höhe des Hohlraumes (2) erstrecken.

4. Vorrichtung nach Anspruch 2 oder 3,
**dadurch gekennzeichnet, daß** die Strömungskanalabschnitte über gekrümmte Übergangsabschnitte ineinander übergehen, und daß vorteilhaft jeweils übernächste Trennelemente (5) an ihren Enden durch Umlenkabschnitte (8, 9) miteinander verbunden sind.

5. Vorrichtung nach Anspruch 4,
**dadurch gekennzeichnet, daß** die vorzugsweise gekrümmten Umlenkabschnitte (8, 9) an den einen Enden der Trennvorrichtung (5) jeweils versetzt zu denen an den anderen Enden liegen.

6. Vorrichtung nach einem der Ansprüche 1 bis 5,
**dadurch gekennzeichnet, daß** das Klimaelement (1, 1b bis 1 h) im wesentlichen eckigen Querschnitt hat.

7. Vorrichtung nach einem der Ansprüche 1 bis 6,
**dadurch gekennzeichnet, daß** der Strömungskanal (2) durch zueinander parallele Seitenwände (17, 18) begrenzt ist, zwischen denen sich die Trennelemente (5) erstrecken.

8. Vorrichtung nach einem der Ansprüche 1 bis 7,
**dadurch gekennzeichnet, daß** das Klimaelement (1, 1b bis 1 h) ein quaderförmiges Bauelement ist, das vorzugsweise einen Einlaß (3, 3d, 3g) und einen Auslaß (4, 4d, 4g) für das Wärmeträgermedium aufweist.

9. Vorrichtung nach Anspruch 8,
**dadurch gekennzeichnet, daß** der Einlaß (3) und der Auslaß (4) an einer Stirnseite (6) des quaderförmigen Bauelementes liegen.

10. Vorrichtung nach Anspruch 8,
**dadurch gekennzeichnet, daß** der Einlaß (3d, 3g) und der Auslaß (4d, 4g) in der einen Seitenwand des quaderförmigen Bauelementes liegen.

11. Vorrichtung nach Anspruch 1,
**dadurch gekennzeichnet, daß** das Klimaelement (1a; 1h) durch mindestens zwei, vorzugsweise mehrere miteinander verbundene Rohrabschnitte (12 bis 15; 12h bis 15h) gebildet ist, die die flächige Wärme/Kälteleitfläche aufweisen.

12. Vorrichtung nach Anspruch 11,
**dadurch gekennzeichnet, daß** die Rohrabschnitte (12 bis 15; 12h bis 15h) im wesentlichen gleichen Abstand voneinander haben und über gekrümmte Übergangsabschnitte (16, 16', 16") ineinander übergehen.

13. Vorrichtung nach Anspruch 11 oder 12,
**dadurch gekennzeichnet, daß** der Einlaß (3) und der Auslaß (4) an den Stirnseiten der endseitigen Rohrabschnitte (12, 15; 12h, 15h) vorgesehen sind.

14. Vorrichtung nach einem der Ansprüche 1 bis 13,
**dadurch gekennzeichnet, daß** das Klimaelement (1b, 1d bis 1f) an seiner Rückseite mindestens ein, vorzugsweise mehrere mit Abstand nebeneinander und/oder hintereinander vorgesehene, vorteilhaft L-Form aufweisende Halteteile (22, 22') hat.

15. Vorrichtung nach Anspruch 14,
**dadurch gekennzeichnet, daß** die Halteteile (22, 22') in Querträger (37) von Haltevorrichtungen (33, 33') einhängbar sind, und daß vorteilhaft die Querträger (37) benachbarte Stützen (34) miteinander verbinden, die vorzugsweise Teil einer Ständerwand (20) sind.

16. Vorrichtung nach Anspruch 15,
**dadurch gekennzeichnet, daß** die Querträger (37) längenverstellbar sind.

17. Vorrichtung nach einem der Ansprüche 1 bis 16,
**dadurch gekennzeichnet, daß** die Klimaelemente (1a bis 1h) an ihrer von der Wärme/Kälteabstrahlfläche abgewandten Rückseite mindestens ein vorteilhaft plattenförmig ausgebildetes Isolierteil (23, 23c, 23d, 23g, 23h) aufweisen.

18. Vorrichtung nach Anspruch 17,
**dadurch gekennzeichnet, daß** das Klimaelement (1 c, 1 d, 1g, 1 h) wenigstens teilweise in das Isolierteil (23c, 23d, 23g, 23h) eingebettet ist, das vorteilhaft das Klimaelement (1 c, 1 d, 1 g, 1 h) seitlich überragt.

19. Vorrichtung nach Anspruch 17 oder 18,
**dadurch gekennzeichnet, daß** das Klimaelement (1 c, 1 d, 1g, 1 h) und das Isolierteil (23c, 23d, 23g, 23h) eine ebene Auflagefläche (17c, 17d, 17f, 17h; 40, 40d, 40g, 40h) für die Raumfläche (35c, 35d, 35h) bilden.

20. Vorrichtung nach einem der Ansprüche 1 bis 19,
**dadurch gekennzeichnet, daß** die Raumfläche (35, 36; 35c, 35d, 35h) eine Wandbeplankung bildet.

21. Vorrichtung nach einem der Ansprüche 1 bis 20,
**dadurch gekennzeichnet, daß** das Klimaelement (1 c, 1 h) über das Isolierteil (23c, 23h) an einer Wand (41) befestigbar ist.

22. Vorrichtung nach einem der Ansprüche 1 bis 20,
**dadurch gekennzeichnet, daß** die Vorrichtung (50d, 50e, 50f, 50h) an einer Decke (42) aufhängbar ist.

23. Vorrichtung nach einem der Ansprüche 1 bis 20,
**dadurch gekennzeichnet, daß** die Vorrichtung (50g, 50h) auf Bodenstützen (43) montierbar ist.

24. Vorrichtung nach Anspruch 23,
**dadurch gekennzeichnet, daß** die Vorrichtung (50g) mit wenigstens einem vorteilhaft aus hochfestem Material bestehenden Isolierteil (23g) auf den Bodenstützen (43) aufliegt.

25. Vorrichtung nach einem der Ansprüche 1 bis 24,
**dadurch gekennzeichnet, daß** das Isolierteil (23h) durch wenigstens eine Klebeschicht (45) mit der Raumfläche (35h) verbunden ist.
